# EUROPEAN PATENT SPECIFICATION

(11) **EP 2 884 102 B1**
(45) Date of publication and mention of the grant of the patent: **02.11.2016**
(21) Application number: 13197574.0
(22) Date of filing: 16.12.2013
(51) Int. Cl.: F16H 1/28, F16C 23/04

(54) **Gearbox for wind power plant**
Getriebe für eine Windkraftanlage
Boîte de vitesses pour installation d'énergie éolienne

(43) Date of publication of application: 17.06.2015
(73) Proprietor: Areva Wind GmbH, 27572 Bremerhaven (DE)
(72) Inventor: Dr.-Ing. MEIMANN, Valentin, 48429 Rheine (DE)
(74) Representative: Prinz & Partner mbB

(56) References cited:
- EP-A1- 2 275 705
- US-A- 6 117 036

## Description

### FIELD OF THE INVENTION

The invention relates to a gearbox for a wind power plant. The invention also relates to drive train of wind power plant with a gearbox and a wind power plant with a gearbox.

### BACKGROUND

Spherical bearings (also known as cup bearings) provide a cardanic or gimbaled mount of a rotating part, for example of a shaft of a gear. The motion of the shaft is restricted to rotation. In order to mount the shaft in axial direction, the spherical bearing acts as a biaxial thrust bearing. For this purpose, a ball socket of the spherical bearing may be sufficiently great to surround the spherical head of the bearing. According to an alternative design, a spherical bearing may comprise two counteracting ball sockets, which limit the movement of the ball head to a rotary motion. A third commonly known design concept applies two separate spherical bearings forming a set of bearings, which limits the movement of the ball head in axial direction. The hemispheres of the two counteracting ball sockets are typically arranged to have a common center so as to allow a slight tiling of the rotational axis of the shaft.

Spherical bearings have widespread applications. Among these, one possible application is mounting of a shaft in a planetary gear. Furthermore, planetary gears may be applied in the drive train of a wind generator (also known as a wind energy plant, a wind power plant or a wind turbine). However, in particular in planetary gears, there may be limited construction space for the bearings.

Exemplary gearboxes are disclosed for a car having a four-wheel drive mode by US 6,117,036 and for a wind generator by EP 2 275 705 A1; these gearboxes comprise gears of opposite helical cut to compensate axial forces.

### SUMMARY

It is an object of the invention to provide a gearbox that allows simplifying the requirements of the bearings of a shaft of a gearbox.

The object of the invention is solved by the subject matter of claim 1.In one aspect of the invention a gearbox for a wind turbine is provided. Advantageously, the gearbox can comprise at least a one stage planetary gear. The gearbox can also comprise several stages. The planetary gear can comprise a sun shaft and sun pinion. The sun shaft and the sun pinion can be coupled to each other by a coupling gear. The planetary gear can further comprise a planet gearwheel. The planet gearwheel can then be coupled to the sun pinion by a running gear. The running gear can have a first helical cut. The first helical cut can then generate a first axial force in the direction of the sun shaft (i.e. parallel to the longitudinal axial direction of the shaft) during operation (i.e. when the gearbox is driven so that the components rotate). The coupling gear can have a second helical cut. The second helical cut can generate a second axial force in the opposite direction of the sun shaft during operation. The second axial force may then advantageously at least partially compensate the first axial force. The first axial force and the second axial force both have effect on the sun pinion, which means that the compensation of the forces actually occurs in the sun pinion.

A gearbox that is configured as previously described reduces the total force induced into the shaft or sun shaft and can therefore be equipped with thrust bearings that are designed for smaller forces. The reduced resulting force also provides that there is no gear lash during braking the turbine. Also other fixing or security means (for example screws fixing the shaft or sun shaft) can be simplified. If the fixing or security means are maintained unchanged, the safety margin of those means can increase.

In other words, a gearbox for a wind turbine can be provided having at least one stage planetary gear. A generator may be connected via a sun shaft to the gearbox. The gearbox may then have a predetermined resulting axial force on the sun shaft at nominal power of the wind turbine. The gearbox may also have a corresponding axial thrust bearing at the corresponding extremity of the sun shaft. Two helical gears with opposite inclination can be used. The helical gears are matched in such a way that the resulting forces tend to compensate each other to a certain extent and the remaining (small) resulting force has a predetermined direction.

In another aspect of the invention, an inclination (or angle) of the first helical cut and an inclination of the second helical cut can be chosen such that the first axial force is greater than the second axial force. Advantageously, the first axial force can be greater than the second force by ten percent or less. This aspect of the invention provides that the first axial force is not entirely compensated. The remaining resulting force continuously pushes the shaft or sun shaft in a defined direction during operation. If the resulting force is not too small, it can be ensured that even under irregular operating conditions, the shaft or sun shaft is always pushed in the same direction.

In an embodiment of the invention, the first axial force can be greater than the second axial force by 1 kN to 10 kN. An advantageous value may be 5 kN in this embodiment.

In an advantageous aspect of the invention, the gearbox may comprise a second coupling gear. The second coupling gear may be provided between shaft or the sun shaft and an output shaft of the gearbox. The first coupling gear and the second coupling gear may then be arranged close to or at opposite ends of the shaft or sun shaft. The second coupling gear can then provide a third axial force in the axial direction of the shaft or sun shaft. The direction can further be opposite to the direction of the second axial force. This aspect provides that the forces in the sun shaft compensate each other.

Advantageously, the second coupling gear can be dimensioned identically to the first coupling gear. This provides that the shaft is impinged from both ends with the same axial force, but in opposite directions. In other words, the third axial force can then have the same magnitude as the second axial force.

Furthermore, the gearbox may comprise a thrust bearing. The thrust bearing may be a biaxial bearing and/or spherical bearing. This provides a biaxial cardanic or gimbaled mount of the shaft and ensures that the biaxial bearing can take up loads, which deviate more or less slightly from a mere axial load.

The invention also provides a drive train of a wind power plant comprising a gearbox according to the aspects and embodiments of the invention.

The invention further provides a wind power plant comprising a gearbox according to the aspects and embodiments of the invention.

### BRIEF DESCRIPTION OF DRAWINGS

Further aspects and features of the invention ensue from the following description of preferred embodiments of the invention with reference to the accompanying drawings, wherein
FIG. 1 shows a simplified drawing of a wind generator according to an embodiment of the invention,
FIG. 2 shows a simplified drive train of a wind generator according to an embodiment of the invention,
FIG. 3 is a simplified perspective view showing a gearbox (planetary gear) according to an embodiment of the invention,
FIG. 4 is a simplified detailed cross section showing a sun shaft of a planetary gear, which is mounted using an antagonistic pair of thrust bearings according to an embodiment of the invention,
FIG. 5 shows a spherical thrust bearing of the embodiment of FIG. 4 in more detail,
FIG. 6 is a simplified cross sectional view of an embodiment of the invention, and
FIG. 7 is simplified diagram illustrating aspects of the invention.

### DETAILED DESCRIPTION OF AN EXAMPLE EMBODIMENT

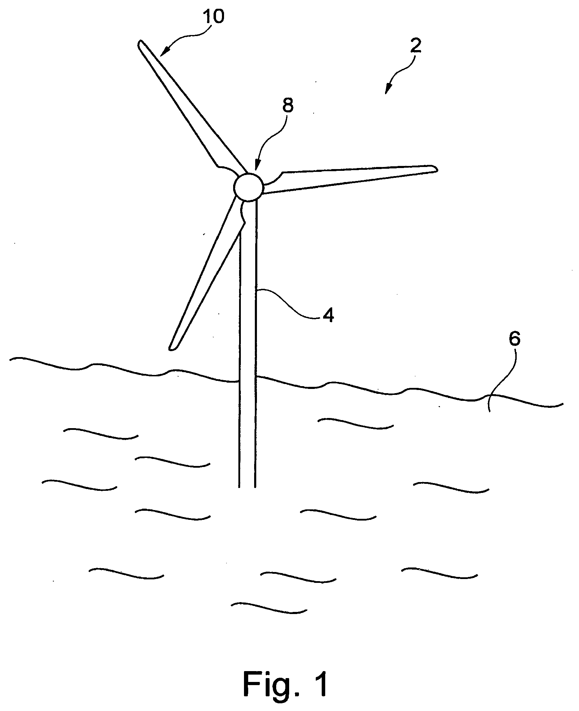

FIG. 1 shows a simplified wind generator 2 according to an embodiment of the invention. The wind generator 2 comprises a supporting structure 4, which is based on a suitable foundation in the sea 6. By way of an example only, the wind power plant 2 is an offshore wind generator. A nacelle (not visible) is arranged at the top of the supporting structure 4, which may be for example a tower. A rotor hub 8 carrying a plurality of rotor blades 10 is coupled to a main shaft 72 of a drive train 70.

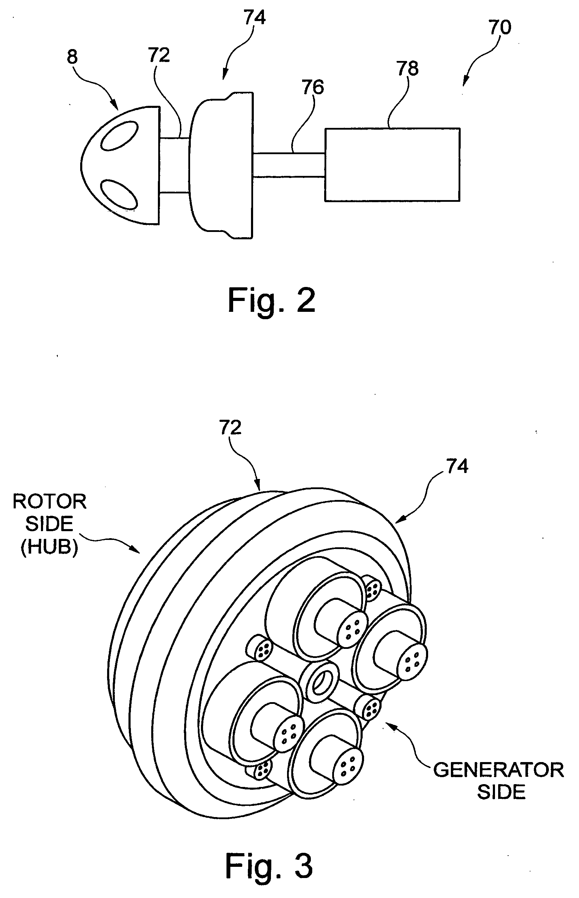

A simplified drive train 70 according to an embodiment of the invention is shown in FIG. 2. The drive train 70 may be arranged in the nacelle of the wind generator 2. The rotor hub 8 is coupled to the main shaft 72, which is the driving shaft of a planetary gear 74. A driven shaft of the planetary gear 74 drives a driven shaft 76 of the generator 78. The drive train 70 may comprise the rotor hub 8, the main shaft 72, the gearbox 74 and the output shaft thereof, which is the driven shaft 76 of the generator 78.

FIG. 3 is a simplified perspective view of the gearbox 74 (planetary gear) according to an embodiment of the invention. The main shaft 72 may be coupled to the gearbox 74 via the main flange 80.

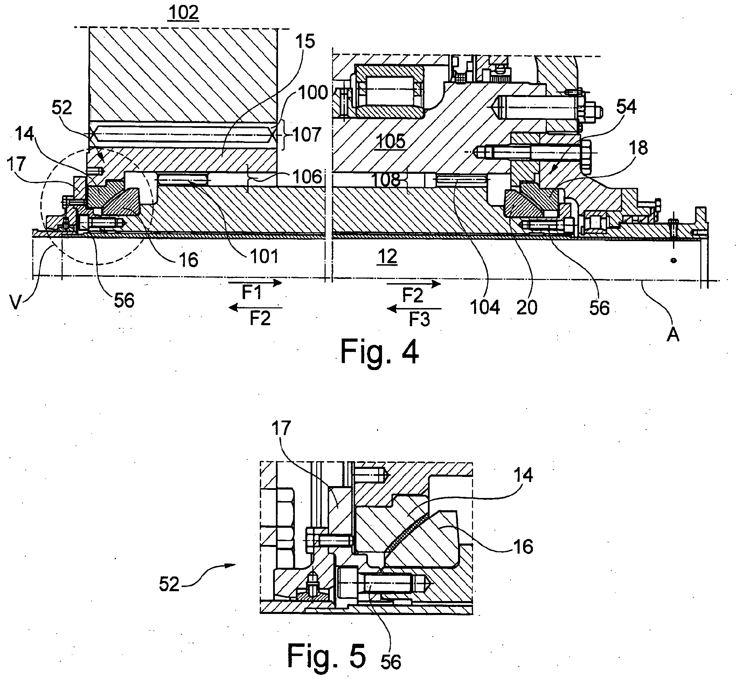

FIG. 4 shows a detailed cross section of a part of the gearbox 74 (planetary gear) according to an embodiment of the invention. The sun shaft 12 (also referred to as clutch shaft) is mounted using a pair of counteracting spherical bearings 52, 54. The sun shaft 12 may be a hollow shaft. For restriction of the movement of the sun shaft 12 to a mere rotation, a first spherical bearing 52, which comprises a first bearing shell 14 and a first flanged wheel 16, is arranged on a left side of the shaft 12. A second spherical bearing 54, which comprises a second bearing shell 18 and a second flanged wheel 20, may be arranged on a right side of the shaft 12. The bearings of the planetary gear are configured for normal or standard operation of the wind generator. This means, due to the rotation of the rotor hub 8, the main shaft 72 applies a torque to the planetary gear 74, which is transferred to the generator 78 for power production. However, in non standard operation modes, for example when a short circuit of the generator 78 occurs, there may be an alternation of the load or load reversal. This reverse operation may cause highly dynamic operating states including various oscillations in the planetary gear. This mode of operation may cause short term overloads of the gears and bearings inside the planetary gear, which take part in the mechanical power transmission.

There is a planet gearwheel 102 (only partially shown), which engages with the sun pinion (or sun gear) 15 through a running gear 107. The planet gearwheel 102 has a running gear with a gearing that has first helical cut. A corresponding helical gearing 100 is provided on the outer side of the sun pinion 15. There is further a first coupling gear 106 between the sun pinion 15 and the sun shaft 12. The first coupling gear 106 has a second helical cut. Reference number 101 refers to the helical gearing on the sun pinion 15 (inner side of the sun pinion 15). A corresponding gearing (no separate reference number) to the gearing 101 is provided on the outer side of the sun shaft 12.

A second coupling gear 108 is provided on the opposite end of the sun shaft 12. The second coupling gear 108 is located between the sun shaft 12 and the output shaft 105. Reference number 104 refers to the helical gearing on the output shaft 105 (inner side of the output shaft 105). A corresponding gearing (no separate reference number) to the gearing 104 is provided on the outer side of the sun shaft 12.

Under normal operating conditions, the planet gearwheel 102 drives the sun shaft 12 through the running gear 107, the sun pinion 15 and the first coupling gear 106. There is no relative movement between the sun pinion 15 and the sun shaft 12 (which is implied by the term coupling gear). The sun shaft 12 drives the output shaft 105 through the second coupling gear 108. There is no relative movement between the sun shaft 12 and the output shaft 105 (which is implied by the term coupling gear).

In this embodiment the second coupling gear 108 and the first coupling gear 106 can have identical dimensions.

The first helical cut of the running gear 107 is chosen such that a first axial force F1 in the axial direction of the sun shaft is provided. Due to the first axial force F1, the sun pinion 15 is pushed towards the right hand side of FIG. 4. The helical cut of the first coupling gear 106 is chosen such that a second axial force F2 is induced that is opposite to the first axial force F1. The second axial force F2 also acts in an axial direction of the sun shaft 12. This means that the first axial force F1 is at least partially compensated by the second axial force F2. The compensation occurs in the sun pinion 15. The respective forces are only induced during operation of the gearbox (rotation). If the gearbox stops, the forces cease.

The second coupling gear 108 induces a third axial force F3 into the sun shaft that is opposite to the counterforce F2' of the second force that is induced in the sun shaft 12 through the first coupling gear 12. If the two couplings gears 106 and 108 are dimensioned identically, forces F2' and F3 always compensate each other within the sun shaft 12 basically independent from the operating conditions.

Due to the compensated forces, the resulting force on the thrust bearings 52, 54 is reduced. This means that these bearings 52, 54 can be simplified, i.e. they can be smaller in size, cheaper etc.

A more detailed cross sectional view of bearing 52 is shown in Fig. 5. A load reversal in the gearbox 74 may cause the support plate 17 to be subject to a significant axial load. This requires a significant safety margin for screws 56, which are used for mounting the support plate 17. The screws 56 are therefore usually oversized. Furthermore, the axial load impact, which is due to the reverse load on the planet gearwheels, may vary for the plurality of planet gearwheels inside the gearbox 74. Consequently, the fastening screws 56, which are arranged around the circumference of the shaft 12 will be subject to different load levels. Furthermore, the shaft 12 may be slightly tilted with respect to the initial longitudinal axis A upon load reversal. Again, the fastening screws 56 may then be exposed to different load levels which increase the requirements for the screws 56. However, due the compensation of the first axial forces F1 by the second axial force F2, the screws 56 may either be simplified (reduced in size etc) or, if they are not changed, the safety margin is increased.

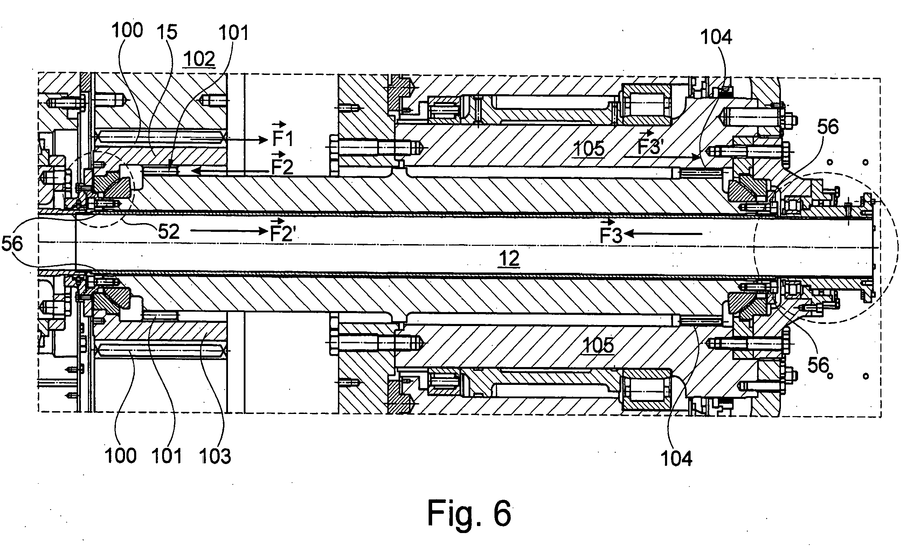

FIG. 6 is a simplified cross sectional view of an embodiment of the invention and shows a larger part of the gearbox 74 than FIG. 4. The first axial force F1, the second axial force F2, the corresponding counterforce F2' and the third axial force F3 as well as its counterforce F3' are indicated. The gearbox is considered to work under normal operating conditions. The first axial force F1 pushes the sun pinion 15 towards the right hand side. The second axial force F2 pushes the sun pinion towards the left hand side. Both forces have effect in an axial direction of the sun shaft 12 (parallel to sun shaft). Axial force F2' (here referred to as counterforce to F2), pushes the sun shaft 12 towards the right hand side. The third axial force F3 results from the second coupling gear 108 and is opposite to F2'. This means that the two forces F2's and F3 compensate each other.

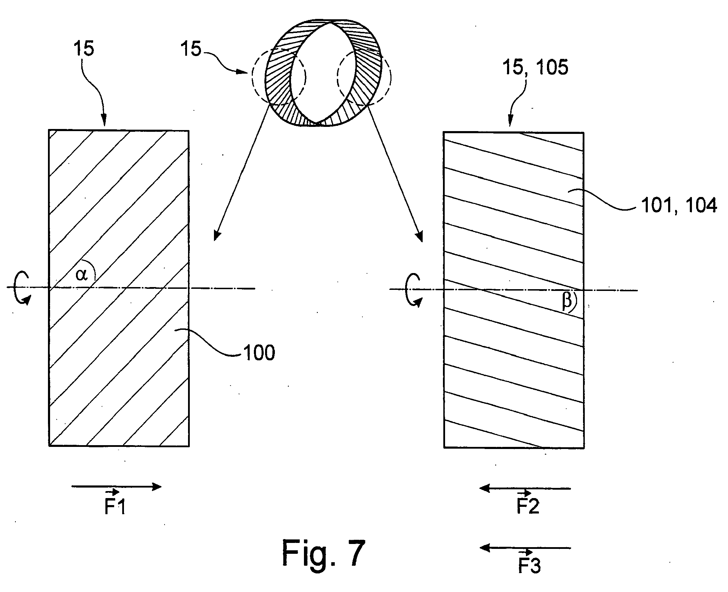

FIG. 7 is simplified diagram illustrating aspects of the invention. The sun pinion 15 has an inner gearing 101 and an outer gearing 100. The outer gearing 100 of the sun pinion 15 engages with a corresponding gearing of the planet gearwheel 102 (not shown). The gearing has an inclination that is characterized by an angle α. The angle α can generally be between 0° and 45°, between 0° and 30° advantageously, between 0° and 20° more advantageously, and still more advantageously between 0° and 15°. The actual angle α shown in this drawing is exaggerated in order to illustrate this aspect of the invention.

On the right hand side, aspects of the first and second coupling gear 106, 108 are illustrated. Shown is the inner gearing 101 of the sun pinion 15 which corresponds to the inner gearing 104 of the output shaft 105. The gearing has an inclination that is characterized by an angle β. The angle β can generally be between 0° and 45°, between 0° and 30° advantageously, between 0° and 20° more advantageously, and still more advantageously between 0° and 15°. The actual angle β shown in this drawing is exaggerated in order to illustrate this aspect of the invention. This configuration provides that the third axial force F3 compensates F2'.

The first axial force F1 is a function of the angle α: F1=f(α,..) (and other parameters which are not further discussed herein). The second axial force F2 is a function of the angle β: F1=f(β,..) (and other parameters which are not further discussed herein). The third force F3 is also a function of the angle β: F1=f(β,..) (and other parameters which are not further discussed herein) if the first and second coupling gear are dimensioned identically.

In this embodiment, the magnitude of the first axial force F1 is greater than or equal to the magnitude of the second axial force F2 (F1 ≥ F2). The magnitude of the second axial force F2 is equal to the magnitude of the third axial force F3 (F2 = F3).

The magnitude of the first axial force F1 can be chosen to be ten percent or less greater than the magnitude of the second axial force F2.

In an embodiment of the invention, F1 can be 50 kN, F2 can be 45 kN and F3 can also be 45 kN. The difference of the first axial force F1 and the second axial force F2 is then 5 kN.

## Claims

1. A gearbox (74) for a wind turbine (2) comprising at least a one stage planetary gear (74) comprising a sun shaft (12) and sun pinion (15) coupled to each other by a first coupling gear (106), a planet gearwheel (102) coupled to the sun pinion (15) by a running gear (107) wherein the running gear (107) has a first helical cut (100) on the outer side of the sun pinion (15) generating a first axial force (F1) in the direction of the sun shaft (12) during operation and the coupling gear (106) has a second helical cut (101) on the inner side of the sun pinion (15) and generating a second axial force (F2) in the opposite direction of the sun shaft (12) during operation such that the second axial force (F2) compensates the first axial force (F1) at least partially.

2. The gearbox (74) according claim 1, wherein an inclination (α) of the first helical cut (100) and an inclination (β) of the second helical cut (101) are chosen such that the first axial force (F1) is greater than the second axial force (F2) by ten percent or less.

3. The gearbox (74) according to claim 1 or 2, wherein the first axial force (F1) is greater than the second axial force (F2) by 1 kN to 10 kN.

4. The gearbox (74) according to any previous claim, further comprising a second coupling gear (108) between the sun shaft (12) and an output shaft (105) of the gearbox (74).

5. The gearbox (74) according to claim 4, wherein the second coupling gear (108) is dimensioned identically to the first coupling gear (106).

6. The gearbox (74) according to claim 4 or 5, wherein the first coupling gear (106) and the second coupling gear (108) are arranged on opposite ends of the sun shaft (12).

7. The gearbox (74) according to anyone of claims 4 to 6, wherein the first coupling gear (106) and the second coupling gear (108) are configured such that their axial forces (F2', F3) in the direction of the shaft during operation compensate each other.

8. A drive train (70) of a wind power plant (2) comprising a gearbox (74) according to anyone of claims 1 to 7.

9. A wind power plant (2) comprising a gearbox (74) according to anyone of claims 1 to 7.

## Patentansprüche

1. Getriebe (74) für eine Windenergieanlage (2), mit wenigstens einem einstufigen Planetengetriebe (74) mit einer Sonnenwelle (12) und einem Sonnenritzel (15), die über ein erstes Kopplungsgetriebe (106) miteinander gekoppelt sind, wobei ein Planetenrad (102) über ein Laufgetriebe (107) mit dem Sonnenritzel (15) gekoppelt ist, wobei das Laufgetriebe (107) eine erste Schrägverzahnung (100) an der Außenseite des Sonnenritzels (15) aufweist, die im Betrieb eine erste Axialkraft (F1) in Richtung der Sonnenwelle (12) erzeugt, und das Kopplungsgetriebe (106) eine zweite Schrägverzahnung (101) an der Innenseite des Sonnenritzels (15) aufweist und im Betrieb eine zweite Axialkraft (F2) in der entgegengesetzten Richtung der Sonnenwelle (12) erzeugt, derart, dass die zweite Axialkraft (F2) die erste Axialkraft (F1) zumindest teilweise ausgleicht.

2. Getriebe (74) nach Anspruch 1, bei dem eine Neigung (α) der ersten Schrägverzahnung (100) und eine Neigung (β) der zweiten Schrägverzahnung (101) so gewählt sind, dass die erste Axialkraft (F1) höchstens zehn Prozent größer als die zweite Axialkraft (F2) ist.

3. Getriebe (74) nach Anspruch 1 oder 2, bei dem die erste Axialkraft (F1) 1 kN bis 10 kN größer als die zweite Axialkraft (F2) ist.

4. Getriebe (74) nach einem vorhergehenden Anspruch, ferner mit einem zweiten Kopplungsgetriebe (108) zwischen der Sonnenwelle (12) und einer Abtriebswelle (105) des Getriebes (74).

5. Getriebe (74) nach Anspruch 4, bei dem das zweite Kopplungsgetriebe (108) identisch zu dem ersten Kopplungsgetriebe (106) bemessen ist.

6. Getriebe (74) nach Anspruch 4 oder 5, bei dem das erste Kopplungsgetriebe (106) und das zweite Kopplungsgetriebe (108) an entgegengesetzten Enden der Sonnenwelle (12) angeordnet sind.

7. Getriebe (74) nach einem der Ansprüche 4 bis 6, bei dem das erste Kopplungsgetriebe (106) und das zweite Kopplungsgetriebe (108) so ausgebildet sind, dass ihre Axialkräfte (F2', F3) in Richtung der Welle einander im Betrieb ausgleichen.

8. Antriebsstrang (70) einer Windkraftanlage (2) mit einem Getriebe (74) nach einem der Ansprüche 1 bis 7.

9. Windkraftanlage (2) mit einem Getriebe (74) nach einem der Ansprüche 1 bis 7.

## Revendications

1. Boîte de vitesses (74) pour turbine éolienne (2), comportant au moins un engrenage planétaire à un étage (74) qui présente un arbre solaire (12) et un pignon solaire (15) couplés l'un à l'autre au moyen d'un premier engrenage d'accouplement (106), une roue planétaire (102) couplée au pignon solaire (15) par un mécanisme de roulement (107), le mécanisme de roulement (107) présentant une première encoche hélicoïdale (100) du côté extérieur du pignon solaire (15) générant une première force axiale (F1) dans le sens de l'arbre solaire (12) pendant le fonctionnement, et l'engrenage d'accouplement (106) présentant une deuxième encoche hélicoïdale (101) du côté intérieur du pignon solaire (15) et générant une deuxième force axiale (F2) dans le sens opposé de l'arbre solaire (12) pendant le fonctionnement de sorte que la deuxième force axiale (F2) compense au moins partiellement la première force axiale (F1).

2. Boîte de vitesses (74) selon la revendication 1, une inclinaison (α) de la première encoche hélicoïdale (100) et une inclinaison (β) de la deuxième encoche hélicoïdale (101) étant choisies de sorte que la première force axiale (F1) est de 10 pour cent ou moins supérieure à la deuxième force axiale (F2).

3. Boîte de vitesses (74) selon la revendication 1 ou 2, la première force axiale (F1) étant de 1 kN à 10 kN supérieure à la deuxième force axiale (F2).

4. Boîte de vitesses (74) selon l'une des revendications précédentes, comportant en outre un deuxième engrenage d'accouplement (108) entre l'arbre solaire (12) et un arbre de sortie (105) de la boîte de vitesses (74).

5. Boîte de vitesses (74) selon la revendication 4, le deuxième engrenage d'accouplement (108) étant dimensionné de manière identique au premier engrenage d'accouplement (106).

6. Boîte de vitesses (74) selon la revendication 4 ou 5, le premier engrenage d'accouplement (106) et le deuxième engrenage d'accouplement (108) étant agencés à des extrémités opposées de l'arbre solaire (12).

7. Boîte de vitesses (74) selon l'une des revendications 4 à 6, le premier engrenage d'accouplement (106) et le deuxième engrenage d'accouplement (108) étant réalisés de sorte que leurs forces axiales (F2', F3) dans le sens de l'arbre pendant le fonctionnement se compensent.

8. Train d'entraînement (70) d'une éolienne (2) comportant une boîte de vitesses (74) selon l'une des revendications 1 à 7.

9. Eolienne (2) comportant une boîte de vitesses (74) selon l'une des revendications 1 à 7.
